# FASCICULE DE BREVET EUROPEEN

(11) **EP 2 576 911 B1**
(45) Date de publication et mention de la délivrance du brevet: **24.07.2019**
(21) Numéro de dépôt: 11722815.5
(22) Date de dépôt: 01.06.2011
(51) Int. Cl.: E01C 19/10, C08L 95/00

(54) **PROCÉDÉ DE FABRICATION D'ENROBÉS HYDROCARBONÉS À FROID, ENROBÉS HYDROCARBONÉS À FROID À MANIABILITÉ CONTRÔLÉE ET LEUR UTILISATION POUR LA RÉALISATION DE REVÊTEMENTS ROUTIERS**
VERFAHREN ZUR HERSTELLUNG VON KALTEN BITUMINÖSEN GEMISCHEN, KALTE BITUMINÖSE GEMISCHE MIT KONTROLLIERTER BEARBEITBARKEIT UND IHRE VERWENDUNG ZUR HERSTELLUNG VON STRASSENPFLASTERUNGEN
PROCESS FOR MANUFACTURING COLD BITUMINOUS MIXES, COLD BITUMINOUS MIXES WITH CONTROLLED WORKABILITY AND USE THEREOF FOR PRODUCING ROAD PAVEMENTS

(30) Priorité: 04.06.2010 FR 1002368
(43) Date de publication de la demande: 10.04.2013
(73) Titulaire: Eurovia, 92500 Rueil-Malmaison (FR)
(72) Inventeur: DELFOSSE, Frédéric, F-33600 Pessac (FR); GARBAY, Mathieu, F-40600 Biscarosse (FR)
(74) Mandataire: Regimbeau
(86) Numéro de dépôt international: PCT/EP2011/059066
(87) Numéro de publication internationale: WO 2011/151387

(56) Documents cités:
- EP-A1- 0 384 094
- EP-A1- 0 524 031
- EP-A1- 0 552 574
- EP-A1- 0 781 887
- EP-A1- 1 469 038
- EP-A1- 2 072 562
- FR-A1- 2 723 110
- FR-A1- 2 732 239

## Description

La présente invention porte sur un procédé de fabrication d'enrobés hydrocarbonés à froid, sur des enrobés hydrocarbonés à froid à maniabilité contrôlée et sur leur utilisation pour la réalisation de revêtements routiers.

Parmi les enrobés hydrocarbonés, on distingue deux grandes familles : les enrobés hydrocarbonés à chaud et les enrobés hydrocarbonés à froid.

Les enrobés hydrocarbonés à chaud sont obtenus par mélange à chaud des granulats et d'un liant. Ce liant peut être un bitume pur ou modifié (ajout par exemple de polymère(s), de fluxants d'origine pétrolière ou végétale), un liant végétal pur ou modifié ou un liant de synthèse d'origine pétrolière. Les granulats sont chauffés, en règle générale à une température supérieure à 100°C.

Ces enrobés présentent un bon enrobage, une bonne maniabilité et des propriétés mécaniques après mise en oeuvre et refroidissement conformes aux attentes de l'homme de l'art. Leur adaptation aux conditions de trafic du chantier ou de mise en oeuvre se fait en sélectionnant le liant approprié. Il n'est en général pas nécessaire de séquencer l'étape de mélange des fractions granulaires et du liant.

Toutefois, les contraintes environnementales croissantes et l'augmentation des coûts des combustibles pour le chauffage des matériaux ont amené les entreprises à développer les enrobés hydrocarbonés à froid.

Par enrobés hydrocarbonés à froid, on entend: « enrobé hydrocarboné réalisé à partir de granulats, d'un liant hydrocarboné et éventuellement de dopes et/ ou d'additifs, dont les caractéristiques permettent un enrobage sans séchage et chauffage des granulats », définition de la norme NF P 98-149 (Terminologie des enrobés hydrocarbonées).

Ainsi, les enrobés hydrocarbonés à froid sont fabriqués par enrobage de la totalité des granulats (dont la totalité de la fraction 0/D) avec un liant hydrocarboné. Le liant hydrocarboné est le plus souvent sous forme d'émulsion ou de mousse. Ce liant est un bitume, un bitume modifié par des polymères, un liant de synthèse pétrolier et/ou un liant végétal. Le liant peut être fluxé ou fluidifié par des produits d'origine pétrolière ou végétale.

La température de fabrication de ces enrobés, qui est proche de la température ambiante (la température minimale conseillée est d'environ 10 °C, la gamme s'étend donc avantageusement de 10°C à 40°C), donne au liant, après rupture de l'émulsion pour une émulsion de liant, un rôle très important sur la maniabilité et la compactabilité de l'enrobé. Dans cette gamme de température, la viscosité importante du liant réduit la compactabilité de l'enrobé et ainsi diminue les propriétés mécaniques de l'enrobé obtenu.

Par ailleurs, la qualité de l'enrobage peut être médiocre, avec l'observation d'un phénomène de désenrobage : mauvaise répartition du film de bitume sur la totalité de la fraction granulaire, d'autant plus que la teneur en fluxant ou fluidifiant est élevée. Plus la fraction granulaire contient de fines, plus mauvaise sera la répartition du liant sur la fraction granulaire (principalement sur les gros éléments).

Pour remédier à ou limiter ces problèmes de perte de compactabilité et de mauvaise répartition du film de bitume sur la totalité de la fraction granulaire, l'étape de mélange des fractions granulaires et du liant peut être séquencée.

Un premier procédé proposé consiste à réaliser un double enrobage. Ainsi, pour remédier aux problèmes de l'enrobage à froid, le brevet EP0 384 094 décrit un procédé de fabrication d'enrobés denses bitumineux stockables constitués de matériaux ou éléments 0/D enrobés dans un liant à base de bitume fluxé ou fluidifié qui consiste à séparer les matériaux en deux granulométries, l'une regroupant les éléments les plus fins et, l'autre, les éléments restants ; à enrober les éléments les plus fins à l'aide d'une première émulsion de liant bitumineux ; à enrober les éléments restants à l'aide d'une seconde émulsion de liant bitumineux d'une viscosité très sensiblement supérieure à celle de la première émulsion et à mélanger ensuite pendant quelques secondes l'ensemble des éléments 0/D. Ce procédé conduit à des enrobés très bien enrobés et stockables mais qui présentent à la mise en oeuvre des risques d'orniérage sous des trafics importants notamment parce que le liant employé pour l'enrobage des éléments fins a une viscosité très faible.

Le second procédé proposé consiste à enrober de manière séquencée les fractions granulaires 0/d et d/D, dans un même malaxeur. Ainsi, le brevet EP 0524031 décrit un procédé de séquençage dans lequel sont ajoutés successivement dans un malaxeur : les gros éléments (fraction d/D), une première émulsion, les éléments fins (fraction 0/d) et une deuxième émulsion. L'ensemble est mélangé selon une durée suffisante pour obtenir un mélange homogène susceptible d'être stocké pendant la période de temps nécessaire. Les formules des deux émulsions peuvent être différentes. Les liants utilisés sont des bitumes purs ou des bitumes fluxés. Par éléments grossiers, sont considérés les éléments dont le diamètre est compris entre 2 et 31 mm et par éléments fins, sont considérés les éléments dont le diamètre est compris entre 0 et 2 mm. Le brevet EP 0781887 décrit également un procédé de séquençage en reprenant les étapes suivantes :
- Introduction dans un malaxeur des gros éléments (diamètre compris entre 2 et 20 mm)
- Introduction d'une première émulsion dosée de manière à obtenir un film de liant homogène et uniforme sur les éléments gros
- Introduction des éléments fins, et
- Introduction d'une deuxième émulsion dosée pour obtenir un enrobage total du mélange, caractérisé en ce que la deuxième émulsion est obtenue à partir de la première émulsion pendant le malaxage par l'ajout d'un agent. Cet agent est composé de tensioactifs, d'acide chlorhydrique, d'eau et de fluidifiant pétrolier.

La première émulsion est constituée d'un bitume pur ou modifié et est décrite comme une émulsion de type ECM 65 ou ECM 69 avec un indice de rupture inférieur à 140. Le rôle de l'agent est de modifier cette première émulsion pour obtenir des enrobés prêts à l'emploi ou prêts au transport vers l'endroit de leur emploi.

Afin d'améliorer les propriétés des enrobés obtenus selon ces différents procédés (lacunes d'enrobage en fonction de la teneur en sable, propriétés mécaniques insuffisantes liées à la présence trop importante de fluxant, mauvaise répartition du film de bitume...), différents procédés ont été proposés ; procédés comprenant une étape de chauffage :
- procédé décrit dans la demande EP 0 552 574 : procédé de fabrication d'enrobés routiers en deux étapes, caractérisé en ce que lors d'une première phase une partie granulaire est pré-enrobée à chaud (100 à 200°C) à l'aide d'un liant anhydre en une proportion suffisante pour assurer qu'après refroidissement le matériau ne soit pas cohésif, puis on procède à l'enrobage à froid de l'ensemble du matériau précédent et, le cas échéant, d'un complément granulaire, au moyen d'une émulsion de liant ;
- procédé décrit dans la demande FR 2 732 239 : l'enrobé à froid est obtenu avec une émulsion du liant d'enrobage puis repris dans un réchauffeur qui, sans assécher l'eau dans laquelle il baigne, en fait un enrobé à tiède ou à chaud. Le liant ainsi ramolli permet d'obtenir un enrobé présentant après mise en oeuvre et compactage des propriétés mécaniques améliorées. Dans la même idée le brevet EP 1 668 184 propose de réchauffer les enrobés à froid en précisant de façon plus étroite la température de chauffage de l'enrobé qui se situe entre 30 et 60°C.

Ces différents procédés, qui ont pour but d'améliorer les performances des enrobés à froid, procèdent à des étapes de chauffage pour faciliter l'enrobage et/ou pour améliorer la compactabilité de l'enrobé. Comparativement aux différents procédés réalisés à froid, ces derniers procédés sont plus consommateurs en combustible ce qui impactera l'analyse du cycle de vie de ce type d'enrobé.

On citera aussi EP 2 072 562 qui décrit un autre procédé de fabrication d'enrobés à froid.

L'invention a pour objet un procédé de fabrication d'enrobés hydrocarbonés à froid, selon la revendication 1, constitués de fractions solides minérales enrobées à l'aide d'un liant en émulsion, ledit liant comprenant un agent fluxant ou fluidifiant, caractérisé en ce qu'il comprend les étapes successives suivantes :
a. dans un malaxeur, enrober à température ambiante la totalité des fractions solides minérales avec un liant en émulsion, ladite émulsion comprenant la totalité du liant mais ne contenant pas la totalité de l'agent fluxant ou fluidifiant, pendant un intervalle de temps T suffisant pour observer un enrobage de l'enrobé ; puis
b. à la fin de l'intervalle de temps T, ajouter la quantité restante de l'agent fluxant ou fluidifiant, et éventuellement un additif adapté à la nature de l'agent fluxant ou fluidifiant, dans le malaxeur, pendant un intervalle de temps t, tel que le ratio T/t soit supérieur à 2, les autres conditions de mélange des étapes a) et b) étant par ailleurs sensiblement identiques.

Les étapes a) et b) sont réalisées à température ambiante (avantageusement de 10°C à 40°C) : les fractions minérales solides et le liant en émulsion n'y subissent pas d'étape de chauffage ou de réchauffage.

Les enrobés hydrocarbonés à froid obtenus par ce procédé présentent un enrobage de bonne qualité (au moins équivalent à celui observé pour les enrobés hydrocarbonés à chaud) sans les inconvénients observés avec les procédés de l'art antérieur ; c'est-à-dire sans problème de désenrobage, même à teneur importante en agent fluxant ou fluidifiant. L'adaptation de la teneur en fluxant ou fluidifiant permettra de réguler la rhéologie du liant au domaine d'application visé : enrobés stockables, enrobés à froid pour couche de roulement, couche d'assise. En outre, aucune étape de chauffage ou de réchauffage, notamment pour modifier les propriétés rhéologiques du liant ou hydrophober une partie des granulats et/ou l'enrobé à froid fabriqué n'est nécessaire. Les enrobés hydrocarbonés à froid obtenus par le procédé selon l'invention répondent donc aux exigences de la norme NF P 98-149 et la consommation énergétique en combustible est faible.

Il a été constaté que l'ajout de l'agent fluxant ou fluidifiant en fin de malaxage, et éventuellement d'un additif adapté à la nature de l'agent fluxant ou fluidifiant durant le malaxage ou en fin de malaxage, avantageusement en fin de malaxage, permet de modifier la rhéologie de l'enrobé hydrocarboné à froid lors de sa mise en oeuvre et ainsi réduit la viscosité du liant pour favoriser la compactabilité de l'enrobé mais également la montée en cohésion de l'enrobé.

L'étape a) est réalisée pendant un intervalle de temps T suffisant pour observer une rupture de l'émulsion qui soit avancée sans nécessairement être complète. Cette cinétique de rupture est évaluée en prélevant dans le malaxeur 10 g d'enrobés que l'on mélange ensuite dans 50 g d'eau : si l'émulsion est rompue, l'eau reste translucide ; autrement l'eau se colore (en gris/noir pour du bitume, d'une couleur blanchâtre pour un liant végétal). L'homme du métier sait aussi déterminer visuellement la qualité de l'enrobage.

L'intervalle de temps t doit être suffisamment court pour ne pas observer de désenrobage, d'autant plus lorsque la teneur en fluxant ou fluidifiant est élevée. On a en effet observé que si la durée de mélange à l'étape b) est trop longue, les enrobés obtenus présentent de nouveau les inconvénients observés avec les procédés de l'art antérieur (mauvaise répartition du film de liant sur la totalité de la fraction granulaire). L'intervalle de temps t est court, il ne doit pas être trop long. Il est supposé que l'intervalle de temps t doit être tel que l'agent fluxant ou fluidifiant reste en surface des enrobés ; l'intervalle de temps t doit être suffisamment court pour limiter la diffusion de l'agent fluxant ou fluidifiant.

Le ratio T/t est dépendant de la quantité totale de fluxant ou fluidifiant (il peut être augmenté quand la quantité totale de fluxant augmente). Il est également dépendant du moment de l'introduction du fluxant ou fluidifiant : plus la quantité de fluxant ou fluidifiant présent à l'étape a) est importante, plus le ratio T/t peut être élevé.

L'intervalle de temps t va également être dépendant de l'énergie d'adhésion entre le liant et les fractions solides minérales. Plus cette énergie d'adhésion est élevée, plus l'intervalle de temps t pourra être long. L'énergie d'adhésion est mesurée par le test Duriez tel que défini dans la norme NF P98-251-4 (version août 2004) : détermination pour deux modalités de compactage du pourcentage de vides et de la tenue à l'eau à 18°C à partir du rapport des résistances à la compression avec et sans immersion des éprouvettes.

Le ratio T/t est avantageusement supérieur à 3. Le ratio T/t est avantageusement compris entre 2 et 6, plus avantageusement entre 3 et 5.

Les étapes a) et b) peuvent être successives sans interruption ou le procédé peut être arrêté, suite à l'étape a), avant la réalisation de l'étape b) (par exemple stockage). Selon une variante avantageuse de l'invention, les étapes a) et b) sont réalisées dans un seul et même malaxeur, l'étape b) étant réalisée directement à la fin de l'intervalle de temps T, sans interruption longue entre les étapes a) et b). On appelle « interruption longue » un stockage du mélange.

Lorsque les étapes a) et b) sont successives sans interruption, la durée de l'étape b) est significativement plus courte que celle de l'étape a). Le ratio T/t est avantageusement supérieur à 3. Les malaxeurs sont avantageusement un seul et même malaxeur, mais on pourrait utiliser deux malaxeurs différents en série.

Lorsque les étapes a) et b) ne sont pas successives mais sont interrompues par un stockage des enrobés obtenus suite à l'étape a), l'intervalle de temps t est déterminé au cas par cas par l'homme du métier, étant rappelé qu'il doit être tel que l'on n'observe pas de désenrobage et que l'agent fluxant ou fluidifiant reste en surface des enrobés. Le stockage, principalement lorsque les enrobés obtenus suite à l'étape a) ne comprennent pas d'agent fluxant ou fluidifiant, peut permettre d'augmenter l'énergie d'adhésion entre le liant et les fractions solides minérales, avec pour conséquence que l'intervalle de temps t pourra être plus long avant d'observer un désenrobage. Il est toutefois considéré par les inventeurs qu'il n'est pas intéressant d'augmenter la durée de cet intervalle de temps t.

Le ratio T/t pourra être adapté à chaque cas particulier par des études préalables, à l'échelle du laboratoire ou directement sur chantier, qui n'excèdent pas le travail normal de l'homme du métier.

L'agent fluxant est avantageusement un fluxant d'origine pétrolière ou pétrochimique. Un fluxant pétrolier est un produit issu de la distillation du pétrole brut (fraction(s) légère(s)), ayant pu subir éventuellement une opération d'hydrotraitement. En particulier, l'agent fluxant est choisi dans le groupe constitué par les agents fluxants commercialisés par Total (Greenflux® 2000®, Greenflux SD). Un fluxant pétrochimique est un produit issu de la distillation du pétrole brut (fraction(s) légère(s)), ayant subi au moins une opération de craquage thermique et de distillation complémentaire. En particulier, l'agent fluxant est choisi dans le groupe constitué par les agents fluxants commercialisés par VFT France (Adheflux ®).

L'agent fluxant est avantageusement un fluxant d'origine carbochimique. Un fluxant carbochimique est un produit issu de la pyrolyse du charbon, ayant subi au moins une opération de distillation.

L'agent fluxant est avantageusement un fluxant d'origine naturelle non fossile (origine végétale ou animale). Un fluxant d'origine naturelle non fossile est une huile naturelle non fossile, leurs dérivés tels que les esters d'acide gras et leurs mélanges. Ces agents fluxants d'origine naturelle non fossile sont bien connus de l'homme du métier.

Préférentiellement, on utilisera les huiles végétales telles que les huiles de tournesol, de colza, d'arachide, de coprah, de lin, de palme, de soja, d'olive, de ricin, de maïs, de courge, de pépins de raisin, de jojoba, de sésame, de noix, de noisette, de bois de chine, le tall oil, leurs dérivés, ainsi que leur mélanges. Par exemple, l'agent fluxant est choisi dans le groupe constitué par les agents fluxants commercialisés Oléoroute (Oleoflux ®).

En particulier, le fluxant d'origine naturelle non fossile est choisi dans le groupe constitué par :
- les esters des acides glycolique, lactique et gluconique, les esters méthyliques, éthyliques et isobutyliques des acides glutarique, succinique et adipique, et leur mélanges (tel que décrit dans la demande WO2006070104) ;
- les éthers ou esters d'un produit issu de la déshydratation interne d'un sucre, de préférence d'un sucre hydrogéné, en particulier un éther ou un ester d'isosorbide, de sorbitan, d'isommanide, de mannitan, d'isodide ou d'iditan, ou un mélange d'au moins deux de ces produits, plus avantageusement le diméthylisosorbide (tel que décrit dans la demande WO2006070104) ;
- des acides, des esters, en particulier des monoesters dont les monoesters méthyliques, ou des amides, éventuellement fonctionnalisés par oxydation, obtenus à partir d'huiles végétales ou animales (huile de pin, de tournesol, de colza, de lin, de ricin, d'arachide, de coprah, d'olive, de palme, de coton, de maïs, de suif, de saindoux, de palmiste, de soja, de courge, de pépins de raisin, d'atgan, de jojoba, de sésame, de noix, de noisette, de bois de chine, de riz - tels que décrits dans les demandes FR 2 785 603, FR 2 910 477, EP 900 822, FR 2 721 043 ou FR 2 891 838), et leurs mélanges
- les huiles lourdes d'origine minérales, les huiles et graisses animales et végétales, et leurs dérivés fonctionnalisés avec des produits de transestérification et des produits de saponification et leurs mélanges, les mono-, di- ou triacides carboxyliques organiques, saturés ou insaturés, ayant de 6 à 24 atomes de carbone pouvant être ramifiés (tels que décrits dans la demande AT 406 375) ;
et leurs mélanges.

L'agent fluidifiant est avantageusement un mélange de coupes légères pétrolières tel que le kérosène ou le white spirit.

Parmi ces fluxants ou fluidifiants, on préfère les fluxants ou fluidifiants ayant une siccativité réglable, c'est-à-dire les agents fluxants ou fluidifiant qui s'autoxypolymérisent sous l'action de l'air ; notamment en raison de la présence d'un groupe fonctionnel oxydable (choisi parmi les groupes acide carboxylique, diacide carboxylique, époxyde, peroxyde, aldéhyde, éther, ester, alcool et cétone) ou d'une insaturation autre qu'un cycle (double liaison, triple liaison). La présence d'atomes d'oxygène sur les molécules de l'agent fluxant permet la formation de ponts oxygène entre les molécules de l'agent fluxant et/ou entre les molécules de l'agent fluxant et d'autres composés du mélange comme le liant. La présence d'insaturations permet la formation de ponts d'oxygène à partir de l'oxygène de l'air par réaction radicalaire. Lorsque le fluxant est un fluxant d'origine naturelle non fossile, en particulier une huile végétale ou un monoester d'acide gras et d'un alcool, il possède avantageusement un indice d'iode supérieur ou égal à 120, signe de son aptitude à réagir avec l'oxygène de l'air.

Parmi ces fluxants ou fluidifiants, on peut également utiliser les fluxants ou fluidifiants volatils, tels que les solvants d'origine pétrolière.

On pourra utiliser un ou plusieurs de ces agents fluxants ou fluidifiants, seuls ou en mélanges.

Des additifs en fonction de la nature du fluxant ou fluidifiant et du domaine d'application pourront être ajoutés soit durant le malaxage soit en fin de malaxage, avantageusement en fin de malaxage, pour permettre de favoriser la montée en cohésion de l'enrobé. L'ajout d'un additif adapté, en fin de malaxage, à la nature du fluxant ou du fluidifiant pourra permettre une meilleure montée en cohésion de l'enrobé.

Parmi ces additifs, on peut citer :
- des siccativants pour permettre une cinétique d'oxydation des fluxants ou fluidifiants d'origine végétale : des sels métalliques, en particulier un octoate ou naphténate de cobalt, de manganèse ou de zirconium ;
- du ciment
- de la chaux
- du chlorure de calcium

Ces additifs permettent, par réaction d'oxydation, de polymérisation ou autre de l'agent fluxant ou fluidifiant, de limiter dans le temps l'effet de l'agent fluxant ou fluidifiant : apport de fluidité diminué au cours du temps par blocage de l'agent fluxant ou fluidifiant. Par exemple, lorsque l'agent fluxant comprend un triacide carboxylique organique ayant de 6 à 24 atomes de carbone (trimère ; en mélange avec des monomères et des dimères), l'ajout de ciment ou de chaux entraîne par exemple la formation de chélates : au bout d'un certain temps, le triacide ne peut plus remplir sa fonction d'agent fluxant.

Il est en effet désirable que la consistance du liant soit telle qu'elle permette un bon mouillage des granulats et qu'ensuite la consistance du liant évolue afin que les enrobés ainsi réalisés acquièrent des performances mécaniques les rendant propres à leur usage routier (une bonne aptitude au compactage de l'enrobé lors de sa mise en oeuvre), le plus rapidement possible.

Par le choix du couple agent fluxant ou fluidifiant/additif, sur la base des connaissances générales de l'homme du métier, la fluidité du liant est adaptée en fonction des besoins. La quantité en additif, par rapport à la teneur en agent fluxant ou fluidifiant, est déterminé par l'homme du métier sur la base de ses connaissances générales.

Dans le procédé selon l'invention, au moins un partie de l'agent fluxant ou fluidifiant est introduit à l'étape b) ; avantageusement la majorité de l'agent fluxant ou fluidifiant est introduit à l'étape b) (plus de 50% en poids, par rapport au poids total du fluxant, avantageusement plus de 75% en poids). Selon une variante avantageuse de l'invention, la totalité de l'agent fluxant ou fluidifiant est introduite à l'étape b).

L'ajout du fluxant ou fluidifiant en fin de procédé permet d'avoir autour de la fraction minérale solide un liant présentant un gradient de viscosité. Ce gradient permet :
- une meilleure compactabilité des enrobés hydrocarbonés pour des teneurs totales en fluxant ou fluidifiant plus faibles. La présence de l'agent fluxant ou fluidifiant dans le liant en périphérie des fractions minérales solides seulement suffira pour obtenir une bonne compactabilité.
- Une plus faible sensibilité au désenrobage. La présence d'un liant plus visqueux au contact de la fraction minérale solide permet d'avoir une énergie d'adhésion plus forte.

La quantité d'agent fluxant ou fluidifiant est déterminée en fonction du domaine d'emploi de l'enrobé. De faible teneurs en fluxant ou fluidifiant seront recherchées pour les enrobés de couche d'assise ou de roulement et des teneurs plus importantes seront recherchées pour les enrobés stockables.

Pour les enrobés hydrocarbonés à froid destinés à être utilisés pour couche de roulement ou couches d'assise, on introduit, selon la nature du fluxant, avantageusement 1 à 20 % en poids d'agent fluxant ou fluidifiant par rapport au poids de liant, préférentiellement 1 à 12 % en poids d'agent fluxant ou fluidifiant par rapport au poids de liant. Pour les enrobés hydrocarbonés à froid stockables, la teneur en agent fluxant ou fluidifiant sera avantageusement comprise entre 10 et 40 % en poids par rapport au poids de liant, préférentiellement 15 à 25 % en poids par rapport au poids de liant. Ces quantités seront adaptées par des essais de maniabilité (maniabilimètre Nynas ; mesurée selon la méthode décrite dans l'article « émulsions de bitume pour enrobés à froid : l'essai au maniabilimètre Nynas », congrès mondiale des émulsions, 2002) dans le cas des enrobés stockables et/ou par des essais de mesure de module dans le temps pour les autres types d'enrobés.

L'agent fluxant ou fluidifiant peut être introduit tel quel. Selon une variante, le fluxant ou fluidifiant sera préalablement mis sous la forme d'une émulsion huile-dans-eau, ladite émulsion ne comprenant pas de liant, pour favoriser sa dispersion dans l'enrobé. Cette émulsion nécessitera l'utilisation d'émulsifiant amphotère, non ionique, anionique ou cationique, classiquement utilisé par l'homme du métier dans le domaine routier.

Par "fractions solides minérales", on entend ici toutes fractions solides utilisables pour la réalisation d'enrobés hydrocarbonés notamment pour la construction routière, comprenant notamment les granulats minéraux naturels (gravillons, sable, fines) issus de carrière ou de gravière, les produits de recyclage tel que les agrégats d'enrobés résultant du recyclage des matériaux récupérés lors de la réfection des routes ainsi que des surplus de centrales d'enrobage, les rebuts de fabrication, les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, les granulats artificiels de toute origine et provenant par exemple de mâchefers d'incinération des ordures ménagères (MIOM), ainsi que leurs mélanges en toutes proportions.

Les granulats minéraux naturels comprennent :
- des éléments inférieurs à 0,063 mm (filler ou fines)
- du sable dont les éléments sont compris entre 0,063 mm et 2 mm ;
- des gravillons, dont les éléments ont des dimensions
   ∘ comprises entre 2 mm et 6 mm ;
   ∘ supérieures à 6 mm ;

La taille des granulats minéraux est mesurée par les essais décrits dans la norme NF EN 933-2 (version mai 1996).

On entend par « agrégats d'enrobés » des enrobés (mélange de granulats et de liants bitumineux) provenant de fraisage de couches d'enrobé, de concassage de plaques extraites de chaussées en enrobées, de morceaux de plaques d'enrobés, de déchets d'enrobé ou de surplus de productions d'enrobés (les surplus de productions sont des matériaux enrobés ou partiellement enrobés en centrale résultant des phases transitoires de fabrication). Ces éléments et les autres produits de recyclage peuvent atteindre des dimensions jusqu'à 31,5 mm.

On désigne également les « fractions solides minérales » par les termes « fraction minérale 0/D »

Cette fraction minérale 0/D peut être séparée en deux granulométries : la fraction minérale 0/d et la fraction minérale d/D.

Les éléments les plus fins (la fraction minérale 0/d) seront ceux compris dans la plage comprise entre 0 et un diamètre maximal que l'on peut fixer entre 2 et 6 mm (de 0/2 à 0/6), avantageusement entre 2 et 4 mm. Les autres éléments (diamètre minimal supérieur à 2, 3, 4, 5 ou 6 mm ; et environ jusqu'à 31,5 mm) constituent la fraction minérale d/D.

Selon le procédé de l'invention, les enrobés hydrocarbonés à froid peuvent être fabriqués sans séquençage des fractions solides minérales ou par séquençage de ces fractions dans un même malaxeur ou deux malaxeurs en parallèle ou par double enrobage (enrobage au préalable d'une fraction) par une émulsion de liant pur ou liant fluxé. Selon une variante avantageuse de l'invention, préalablement à l'étape a), la fraction minérale 0/D a subi une étape par laquelle la fraction minérale d/D est enrobée à température ambiante
par une émulsion de liant. Il a été constaté qu'un enrobage préalable de la fraction minérale d/D permet d'augmenter l'adhésion entre le liant et les granulats. L'utilisation d'un liant de grade dur (ayant une pénétrabilité à l'aiguille à 25°C inférieure à 100 1/10^{ème} de mm, avantageusement inférieure à 50 1/10^{ème} de mm) permet d'assurer une meilleure stabilité de la fraction enrobée au stockage. Un tel prélaquage augmente l'énergie d'adhésion entre les fractions solides minérales et le liant, avec notamment pour conséquence que la durée t de l'étape b) pourrait être plus longue.

En amont du procédé, dans le cas d'enrobés spécifiques et une consommation en énergie plus importante, préalablement à l'étape a), la fraction minérale 0/D a subi une étape par laquelle la fraction minérale 0/d est enrobée à chaud (T > 100°C) ou à tiède (température ambiante < T < 100°C) par un liant, par un des nombreux procédés décrits dans la littérature. Le liant pourra être une mousse de bitume, un bitume additivé d'une cire, en présence d'eau avec un liant à haute température (> 100°C), avec une émulsion de bitume à 90°C.

En fonction de la nature pétrographique du granulat, un prélaquage au préalable (de la fraction d/D selon la première variante ou de la fraction 0/d selon la deuxièeme variante) suivi d'un temps de séchage de quelques minutes à quelques jours permettra d'améliorer l'adhésion liant/granulat. Ce temps sera à optimiser en fonction du pourcentage de fluxant ou fluidifiant à rajouter en fonction du domaine d'emploi. Ces différents temps sont calés en laboratoire par des essais d'enrobage en fonction du temps de malaxage et de sensibilité à l'eau (essai Duriez NF P98-251-4, version août 2004). Avantageusement, la première variante selon laquelle un prélaquage au préalable de la fraction d/D suivi d'un temps de séchage de quelques minutes à quelques jours permettant d'améliorer l'adhésion liant/granulat est utilisée.

Ainsi, dans un autre mode de réalisation la deuxième variante n'est pas utilisée.

Il est également envisageable de séquencer l'étape a). Ainsi, par exemple, l'étape a) peut être séquencée comme suit :
(i) dans un malaxeur, enrober à température ambiante une partie F1 des fractions solides minérales avec un liant en émulsion L1,
(ii) dans le même malaxeur ou dans un autre malaxeur en série, enrober à température ambiante la partie restante F2 des fractions solides minérales avec le liant en émulsion restant L2,
les parties F1 et F2 constituant ensemble la totalité des fractions solides minérales, les liants L1 et L2 constituant ensemble la totalité du liant qui peut comprendre de l'agent fluxant ou fluidifiant (mais pas la totalité de cet agent) et l'intervalle de temps T étant décompté du début de l'étape (i) à la fin de l'étape (ii).

Le procédé selon l'invention permet la fabrication d'enrobés hydrocarbonés à froid, même lorsque la fraction minérale comprend une quantité importante de fines. Dans une variante avantageuse de l'invention, les fractions solides minérales comprennent, en poids par rapport à leur poids total, au moins 20% de la fraction minérale 0/d, avantageusement au moins 30% de la fraction minérale 0/d. La fraction 0/d peut ainsi représenter jusqu'à 40 à 50% en poids des fractions solides minérales.

Dans la fraction 0/D, la teneur en éléments inférieurs à 0,063 mm est avantageusement de 2 à 17 % en poids, plus avantageusement environ 2 à 12 % en poids, encore plus avantageusement environ 3 à 9 % en poids, encore plus avantageusement environ 5 à 8 % en poids (par rapport au poids total de la fraction 0/D).

La présence d'une quantité significative de fines permet d'augmenter le module des enrobés hydrocarbonés à froid obtenus. La présence d'une quantité élevée de fines permet l'obtention d'un enrobé hydrocarboné plus cohésif. De plus, l'enrobé hydrocarboné sera moins sensible à l'eau, car moins poreux. La rugosité de surface de l'enrobé hydrocarboné, une fois étalé, sera améliorée.

Le procédé selon l'invention permet de s'affranchir des défauts d'enrobage observés avec des émulsions de bitume fluxé en fonction de la teneur en fraction 0/d dans la formule de l'enrobé.

On entend par "liant" tout liant hydrocarboné d'origine fossile ou végétale utilisable pour la réalisation d'enrobés, notamment du bitume pur ou modifié par ajout de polymère(s).

Le liant a pour fonction d'apporter la couleur noire, c'est-à-dire, de bien enrober. Il peut ne pas apporter de maniabilité.

Le liant pourra être un liant mou à dur, avantageusement d'un grade allant de 10/20 à 160/220. Selon la variante de l'invention dans laquelle les fractions minérales ne sont pas préalablement prélaquées, on préfère utiliser un liant de grade égal ou supérieur à 50/70, plus avantageusement des liants de grade 50/70, 70/100, 100/150 ou 160/220. Selon la variante de l'invention dans laquelle les fractions minérales sont préalablement prélaquées, et avec un temps de repos, le liant de prélaquage utilisé est avantageusement un liant dur, plus avantageusement un liant de grade 20/30, 35/50, ou 50/70.

Le liant peut comprendre des additifs couramment utilisés dans le domaine routiers, tels que des polymères (EVA, SBS, SB) réticulés ou non, des poudrettes de caoutchouc, des cires végétales ou d'origine pétrochimique, des dopes d'adhésion.

La teneur totale en liant est avantageusement de 2 à 8 ppc (partie pour cent en poids), avantageusement 3 à 7 ppc, plus avantageusement 3,5 à 5,5 ppc, par rapport au poids de la fraction minérale solide.

Cette teneur en liant correspond à la quantité de liant introduit en tant que tel (liant d'apport) plus la quantité de liant récupéré des agrégats d'enrobés faisant partie de la fraction minérale solide. La teneur en liant d'apport peut être nulle, ou simplement comprise entre 0 et 2 ppc (par rapport au poids de la fraction minérale solide) si la fraction minérale solide est constituée exclusivement d'agrégats d'enrobés. Selon une variante avantageuse de l'invention, la teneur en liant d'apport est d'au moins 1 à 2 ppc, par rapport au poids de la fraction minérale solide.

Ce liant se présente sous la forme d'une émulsion ; une partie du liant pouvant cependant se présenter sous la forme d'une mousse de liant. En particulier, selon la variante de l'invention dans laquelle les fractions minérales 0/d sont préalablement prélaquées, le liant de prélaquage peut être exclusivement ou partiellement sous la forme d'une mousse de liant, d'un liant additivé ; le liant utilisé par la suite sera lui sous la forme d'une émulsion.

On entend par mousse de liant, un procédé d'injection dans l'arrivée du liant d'une quantité d'eau et éventuellement d'air, l'eau étant pure ou additivée par des additifs permettant de modifier les propriétés d'adhésivité voire rhéologiques du liant.

L'émulsion est une dispersion du liant (bitume ou liant végétal) dans l'eau, phase continue du système. On peut ajouter à l'émulsion un agent tensioactif, qui permet de la stabiliser.

Au cours de la fabrication d'une émulsion, le liant est dispersé en fines gouttelettes dans l'eau par exemple par une action mécanique. L'ajout d'un agent tensio-actif forme un film protecteur autour des gouttelettes, les empêchant de s'agglomérer et permettant ainsi de maintenir le mélange stable et de l'entreposer pendant un certain temps. La quantité et le type d'agent tensio-actif ajoutés au mélange déterminent la stabilité de l'émulsion à l'entreposage et influent sur le temps de cure au moment de la pose. L'agent tensioactif peut être chargé positivement, chargé négativement, amphotère ou non-ionique.

L'agent tensioactif est avantageusement d'origine pétrolière, végétale, animale et leur mélanges (par exemple l'agent tensioactif peut être d'origine végétale et pétrolière).

L'agent tensioactif peut être un savon alcalin d'acides gras : sels de sodium ou de potassium d'un acide organique (résine par exemple). L'émulsion est alors anionique.

L'agent tensioactif peut être un savon acide, lequel est généralement obtenu par action de l'acide chlorhydrique sur une ou deux amines. L'émulsion est alors cationique.

Parmi les tensioactifs pertinents pour cette application on peut citer : les tensioactifs commercialisés par Akzo NOBEL (Redicote® E9, Redicote® EM 44, Redicote® EM 76), les tensioactifs commercialisés par CECA (Dinoram® S, Polyram® S, Polyram® L 80), les tensioactifs commercialisés par Meadwestvaco (Indulin® R33, Indulin® R66, Indulin® W5).

On pourra utiliser un ou plusieurs de ces tensioactifs, seuls ou en mélanges.

Le procédé selon l'invention permet l'obtention d'enrobés hydrocarbonés présentant des teneurs en vide plus faibles (avantageusement au moins 2% plus faible), en comparaison avec un enrobé hydrocarboné comprenant une fraction minérale de même nature pétrographique, obtenu par les procédés de l'art antérieur. Le procédé selon l'invention permet d'améliorer la capacité à être compacté des enrobés hydrocarbonés ainsi obtenus.

Il est également décrit des enrobés hydrocarbonés à froid selon la revendication 13, à savoir des enrobés hydrocarbonés à froid, susceptibles d'être obtenus par le procédé selon l'invention, i.e. selon l'une quelconque des revendications 1 à 12, comprenant une fraction solide minérale, un liant et un agent fluxant, caractérisés en ce que, dans la fraction solide minérale la teneur en éléments de taille inférieure à 0,063mm est de 2 à 17% en poids, avantageusement 2 à 12% en poids, plus avantageusement 3 à 9% en poids, par rapport au poids total de la fraction 0/D, et caractérisés en ce que le film liant qui enrobe les granulats est, au contact du granulat, sans fluxant et, en périphérie, riche en fluxant.

Les enrobés hydrocarbonés à froid selon l'invention comprennent une fraction solide minérale telle que décrit précédemment, caractérisée par sa forte teneur en fines.

Les enrobés hydrocarbonés à froid selon l'invention comprennent l'agent fluxant ou fluidifiant, et éventuellement un additif adapté à la nature de l'agent fluxant ou fluidifiant, tel(s) que défini(s) précédemment et dans les quantités précédemment décrites. Cet agent fluxant ou fluidifiant est avantageusement présent sous une forme polymérisée, notamment après réaction avec l'oxygène de l'air.

Le liant présent dans les enrobés hydrocarbonés à froid selon l'invention sera celui décrit précédemment. La teneur totale en liant est telle que décrite précédemment. On y retrouve les tensioactifs utilisés pour fabriquer l'émulsion de liant décrits précédemment.

Les enrobés hydrocarbonés à froid selon l'invention présentent avantageusement une bonne maniabilité : la maniabilité (maniabilimètre Nynas ; mesurée selon la méthode décrite dans l'article « émulsions de bitume pour enrobés à froid : l'essai au maniabilimètre Nynas », congrès mondiale des émulsions, 2002) est inférieure à 200 N au temps pertinent en fonction du domaine d'application. Par exemple, pour des enrobés pour couches d'assise et de roulement, la maniabilité doit être inférieure à 200 N après 4 heures, dans le cas d'une mise en oeuvre sans stockage au préalable des enrobés fabriqués.

Les enrobés hydrocarbonés à froid selon l'invention présentent avantageusement une teneur en vides faible. En comparaison avec un enrobé hydrocarboné comprenant une fraction minérale de même nature pétrographique, obtenu par les procédés de l'art antérieur, la teneur en vide des enrobés hydrocarbonés à froid selon l'invention est avantageusement réduite d'au moins 2%, plus avantageusement d'au moins 3%, encore plus avantageusement d'au moins 4% (mesurée par éprouvette du test Duriez selon la norme NF P98-251-4, modalité 2 (version août 2004)).

L'invention a pour autre objet l'utilisation d'enrobés hydrocarbonés à froid, selon l'invention, pour la fabrication de couches de roulement. Les enrobés hydrocarbonés à froid selon l'invention sont particulièrement adaptés aux travaux d'entretien, mais peuvent aussi servir pour des travaux neufs ou de réhabilitation. Ils sont particulièrement adaptés pour la fabrication de couches de roulement pour un trafic faible à modéré.

L'invention a pour autre objet l'utilisation d'enrobés hydrocarbonés à froid, selon l'invention, pour la fabrication de graves émulsions. Ces graves émulsions sont alors utilisées pour la fabrication de couches d'assise ou de couches de bases. Les enrobés hydrocarbonés à froid selon l'invention sont particulièrement adaptés aux travaux d'entretien, mais peuvent aussi servir pour des travaux neufs ou de réhabilitation. Les graves émulsions peuvent rester non recouverts ou être recouverts par un enduit ou par des enrobés bitumineux.

L'invention a pour autre objet l'utilisation d'enrobés hydrocarbonés à froid, tels que décrits précédemment, pour la fabrication d'enrobés stockables.

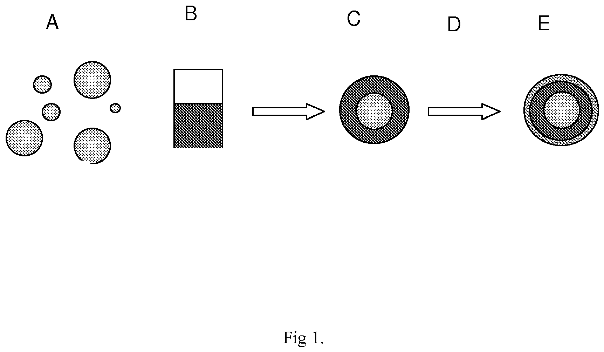

La figure 1 représente le procédé de fabrication des enrobés à froid selon l'invention : les granulats (A) sont malaxés avec l'émulsion (B) de liant. A la fin de l'étape de malaxage, mais après la rupture de l'émulsion de façon homogène sur le 0/D, lorsque les granulats sont enrobés d'un film mince de bitume (C), le fluxant (D) est ajouté à l'aide d'une rampe spécifique (E). Il y a ramollissement du film de bitume en surface. On distingue autour des fractions enrobées distinctement deux zones : au contact du granulat le film liant sans fluxant et en périphérie un film de liant riche en fluxant.

Les exemples qui suivent illustrent l'invention mais ne sont pas limitatifs.

### Exemple 1 : enrobés hydrocarbonés à froid pour couche de roulement

Les essais ont été réalisés sur des granulats de type dioritique. 3 fractions granulaires sont proposées : 0/4, 4/6 et 6/10.

La coupure 0/4 correspond à la fraction 0/d selon l'invention. Les coupures 4/6 et 6/10 sont mélangés dans un ratio 40 % / 60 %. Cette nouvelle coupure 4/10 correspond à la fraction d/D selon l'invention.

La teneur en éléments de taille inférieure à 0,063 mm est de 5.9 % en poids.

Différentes émulsion on été fabriquées pour procéder à des mélanges :

**Tableau 1 : Emulsions de bitumes F1, F2 et F3**

| | N° Formule | | F1 | F2 | F3 |
|---|---|---|---|---|---|
| LIANT | Bitume | Fournisseur | Total | Total | Total |
| | | Grade | 70/100 | 70/100 | 35/50 |
| | | Teneur (kg/t) | 600 | 520 | 600 |
| | Fluxant | Fournisseur | - | VFT | - |
| | | Nom | - | Adheflux | - |
| | | Teneur (kg/t) | - | 80 | - |
| PHASE AQUEUSE | Emulsifiants | Nature | Indulin W5/Polyram S | Indulin W5/Polyram S | Indulin W5/Dinoram S |
| | | Fournisseur | Meadwestvaco/ Ceca | Meadwestvaco/ Ceca | Meadwestvaco/ Ceca |
| | | Teneur (kg/t) | 4/3 | 4/3 | 6/2 |
| | Acide Chlorhydrique | Teneur (kg/t) | 3 | 3.5 | 3.5 |
| | Eau (kg/t) | | 390 | 389.5 | 388.5 |

Ces émulsions ont été fabriquées à l'aide d'un moulin Atomix C de laboratoire.

A partir de ces émulsions de bitumes, des enrobés hydrocarbonés à froid sont préparés par enrobage direct des factions minérales solides avec les émulsions de liant F1, F2 et F3. Les températures des granulats et des émulsions sont de 20 °C pour les essais. La teneur en eau totale pour l'ensemble de ces mélanges est de 7 ppc/ mélange granulaire 0/D. Les mélanges des enrobés sont réalisés avec un malaxeur de l'entreprise SR Consulting à arbres parallèles et le volume des fabrications est de 25 kg. Les caractéristiques des enrobés hydrocarbonés à froid préparés sont données dans le tableau 2 suivant :

**Tableau 2 : Formulation des enrobés M1, M2, M3 et M4**

| Mélange | | M1 | M2 | M3 | M4 |
|---|---|---|---|---|---|
| Granulats | | 40 % 0/d + 60 % d/D | 100 % d/D | 20 % 0/d + 80 % d/D | 40 % 0/d + 60 % d/D |
| Eau totale | Teneur (ppc/granulats) | 7 | 4 | 6 | 7 |
| Emulsion | N° | F1 | F2 | F2 | F2 |
| | Teneur (ppc/granulats) | 9 | 7 | 9 | 9 |
| Temps de malaxage (s) | | 15 | 15 | 15 | 15 |
| Observations | | (1) | (2) | | |

| | | | | | |
|---|---|---|---|---|---|
| (1) : Avec une émulsion adaptée sans fluxant un enrobé avec un bon enrobage est obtenu. Toutefois, la maniabilité (maniabilimètre Nynas ; mesurée selon la méthode décrite dans l'article « émulsions de bitume pour enrobés à froid : l'essai au maniabilimètre Nynas », congrès mondiale des émulsions, 2002) est supérieure à 200 N après 6 H. La teneur en vides est très élevée : elle est de 13 à 18% (mesurée par éprouvette du test Duriez selon la norme NF P98-251-4, modalité 1 (version août 2004)). (2) : Avec une émulsion fluxée et dès lors que la teneur en fraction 0/d est d'au moins 20 % en poids, on observe une diminution significative de la qualité d'enrobage. Dès 25 % en poids de fraction 0/d, l'enrobage sur la fraction 6/10 est mauvais. Les enrobés M2 ne contiennent pas de fraction minérale 0/d, ils ne peuvent donc pas être utilisés dans la fabrication de couches de roulement. | | | | | |

Pour remédier aux inconvénients observés pour les enrobés M1, M2 et M3, des essais dans lesquels on séquence les étapes de mélange des fractions minérales et on utilise deux émulsions ainsi que des essais selon le procédé de l'invention (M6-1, M6-2 et M6-3) ont été réalisés. Les résultats sont donnés dans le tableau 3 suivant :

**Tableau 3 : Formulation des enrobés M5, M6-1, M6-2 et M6-3**

| Mélange | | M5 | M6 - 1 | M6 - 2 | M6 -3 |
|---|---|---|---|---|---|
| Granulats | | 70 % d/D | 40 % 0/d + 60 % d/D | | |
| Eau totale (ppc) | | - | 7 | 7 | 7 |
| Emulsion | N° | F3 | F1 | | |
| | Teneur (ppc/granulats) | 3.5 (/ d/D) | 8.2 | | |
| Temps de malaxage T (s) | | 10 | 15 | | |
| Granulats | | 30 % 0/d | - | - | - |
| Eau totale (ppc) | | 7 | - | - | - |
| Emulsion | N° | F2 | - | - | - |
| | Teneur (ppc/granulats 0/D) | 6.5 | - | - | - |
| Temps de malaxage (s) | | 20 | - | - | - |
| Fluxant | Nom | - | Adheflux | | |
| | Teneur ppc/granulats | - | 0.6 (soit 11% dans le bitume fluxé) | | |
| Temps de malaxage t (s) | | - | 5 | 10 | 20 |
| Observations | | (3) | (4) | | |

| | | | | | |
|---|---|---|---|---|---|
| (3) Problème de répartition du film de liant, désenrobage progressif des gravillons en fonction du temps de malaxage. On retrouve les mêmes défauts que ceux observés pour les enrobés M3 et M4 de manière décalée dans le temps. (4) Selon l'invention, le fluxant est ajouté après la fabrication de l'enrobé. Un excellent enrobage est observé après l'ajout du fluxant et pour un temps t de malaxage allant de 5 à 10 s. A partir d'une quinzaine de secondes on observe de nouveau le phénomène de désenrobage, déjà observé pour les enrobés M2 à M5. | | | | | |

Suite à ces résultats un enrobé M7, toujours selon l'invention, a été réalisé. La fraction d/D est prélaquée avec l'émulsion F3 à J-1. A J, on ajoute la fraction 0/d (40%) + l'eau et le complément d'émulsion (F1). L'ensemble est mélangé pendant 15 s avant d'ajouter le fluxant (Adheflux) pendant 5 à 15 s. L'enrobé obtenu est parfaitement enrobé. L'enrobé présente une excellente maniabilité après 24 heures.

Des essais de sensibilité à l'eau selon la norme NF P 98 241-4 (version août 2004) ont été réalisé sur cette formule un rapport r/ R de 78 % est mesuré.

Les mesures ont été réalisées après un temps de repos à la fin du procédé, pour mimer au mieux les conditions réelles qui seront rencontrées sur chantier.

## Revendications

1. Procédé de fabrication d'enrobés hydrocarbonés à froid, constitués de fractions solides minérales enrobées à l'aide d'un liant en émulsion, ledit liant comprenant un agent fluxant ou fluidifiant, tel qu'il comprend les étapes successives suivantes :
a. dans un malaxeur, enrober à température ambiante la totalité des fractions solides minérales avec un liant en émulsion, ladite émulsion comprenant la totalité du liant mais ne contenant pas la totalité de l'agent fluxant ou fluidifiant, pendant un intervalle de temps T suffisant pour observer un enrobage de l'enrobé ; puis
b. à la fin de l'intervalle de temps T, ajouter la quantité restante de l'agent fluxant ou fluidifiant, et éventuellement un additif adapté à la nature de l'agent fluxant ou fluidifiant, dans le malaxeur, pendant un intervalle de temps t, tel que le ratio T/t soit supérieur à 2, les autres conditions de mélange des étapes a) et b) étant par ailleurs sensiblement identiques.

2. Procédé selon la revendication 1, **caractérisé en ce que** les étapes a) et b) sont successives sans interruption.

3. Procédé selon la revendication 1, **caractérisé en ce que** les étapes a) et b) ne sont pas successives mais sont interrompues par un stockage des enrobés obtenus suite à l'étape a).

4. Procédé selon l'une quelconque des revendications précédentes, **caractérisé en ce que** l'agent fluxant ou fluidifiant est un fluxant ou fluidifiant d'origine pétrolière, d'origine pétrochimique ou d'origine naturelle non fossile choisi dans le groupe constitué par les huiles végétales, leurs dérivés et leurs mélanges.

5. Procédé selon l'une quelconque des revendications précédentes, **caractérisé en ce que** la totalité de l'agent fluxant ou fluidifiant est introduite à l'étape b).

6. Procédé selon l'une quelconque des revendications précédentes, **caractérisé en ce que** l'agent fluxant ou fluidifiant est introduit sous la forme d'une émulsion huile-dans-eau, ladite émulsion ne comprenant pas de liant.

7. Procédé selon l'une quelconque des revendications précédentes, **caractérisé en ce qu'**on ajoute en outre, lors de l'étape b), un additif adapté à la nature de l'agent fluxant choisi parmi les siccativants, du ciment, de la chaux et du chlorure de calcium.

8. Procédé selon l'une quelconque des revendications précédentes, **caractérisé en ce que** préalablement à l'étape a), les fractions solides minérales ont subi une étape par laquelle la fraction minérale d/D est enrobée à température ambiante avec un liant en émulsion.

9. Procédé selon l'une quelconque des revendications précédentes, **caractérisé en ce que** préalablement à l'étape a), les fractions solides minérales ont subi une étape par laquelle la fraction minérale 0/d est enrobée à tiède (température ambiante < T < 100°C) par un liant.

10. Procédé selon l'une quelconque des revendications précédentes, **caractérisé en ce que** les fractions solides minérales comprennent, en poids par rapport au poids total des fractions solides minérales, au moins 20% de fraction minérale 0/d, avantageusement au moins 30% de fraction minérale 0/d.

11. Procédé selon l'une quelconque des revendications précédentes, **caractérisé en ce que** la teneur en éléments de taille inférieure à 0,063 mm est de 2 à 17% en poids, avantageusement 2 à 12% en poids, plus avantageusement 3 à 9% en poids, par rapport au poids total de la fraction 0/D.

12. Procédé selon l'une quelconque des revendications précédentes, **caractérisé en ce que** la teneur totale en liant est de 2 à 8 ppc (partie pour cent en poids), avantageusement 3 à 7 ppc, plus avantageusement 3,5 à 5,5 ppc, par rapport au poids de la fraction minérale solide.

13. Enrobés hydrocarbonés à froid, susceptibles d'être obtenus par le procédé selon l'une quelconque des revendications 1 à 12, comprenant une fraction solide minérale, un liant et un agent fluxant, **caractérisés en ce que**, dans la fraction solide minérale la teneur en éléments de taille inférieure à 0,063mm est de 2 à 17% en poids, avantageusement 2 à 12% en poids, plus avantageusement 3 à 9% en poids, par rapport au poids total de la fraction 0/D, et **caractérisés en ce que** le film liant qui enrobe les granulats est, au contact du granulat, sans fluxant et, en périphérie, riche en fluxant.

14. Utilisation d'enrobés hydrocarbonés à froid, selon la revendication 13, pour la fabrication de couches de roulement.

15. Utilisation d'enrobés hydrocarbonés à froid, selon la revendication 13, pour la fabrication de graves émulsions.

16. Utilisation d'enrobés hydrocarbonés à froid, selon la revendication 13, pour la fabrication d'enrobés stockables.

## Patentansprüche

1. Verfahren zur Herstellung von Kohlenwasserstoff-Kaltbeschichtungen, die aus festen mineralischen Fraktionen bestehen, welche mithilfe eines Emulsionsbindemittels beschichtet werden, wobei das Bindemittel ein Flux- oder Verflüssigungsmittel umfasst, derart, dass es die folgenden aufeinanderfolgenden Schritte umfasst:
a. in einem Mischer, Beschichten der gesamten festen mineralischen Fraktionen bei Umgebungstemperatur mit einem Emulsionsbindemittel, wobei die Emulsion das gesamte Bindemittel umfasst, aber nicht das gesamte Flux- oder Verflüssigungsmittel enthält, während eines Zeitintervalls T, das ausreichend ist, um ein Beschichten der Beschichtung zu beobachten; anschließend
b. am Ende des Zeitintervalls T, Zugeben der restlichen Menge des Flux- oder Verflüssigungsmittels und gegebenenfalls eines für die Art des Flux- oder Verflüssigungsmittels geeigneten Zuschlagstoffes in den Mischer während eines Zeitintervalls t, derart, dass das Verhältnis T/t größer als 2 ist, wobei die sonstigen Mischbedingungen der Schritte a) und b) darüber hinaus im Wesentlichen identisch sind.

2. Verfahren nach Anspruch 1, **dadurch gekennzeichnet, dass** die Schritte a) und b) ohne Unterbrechung aufeinanderfolgen.

3. Verfahren nach Anspruch 1, **dadurch gekennzeichnet, dass** die Schritte a) und b) nicht aufeinanderfolgen, sondern durch eine Lagerung der nach dem Schritt a) erhaltenen Beschichtungen unterbrochen sind.

4. Verfahren nach einem der vorstehenden Ansprüche, **dadurch gekennzeichnet, dass** das Flux- oder Verflüssigungsmittel ein Flux- oder Verflüssigungsmittel aus Erdöl-Ursprung, petrochemischem Ursprung oder natürlichem, nicht fossilem Ursprung ist, ausgewählt aus der Gruppe bestehend aus Pflanzenölen, deren Derivaten und deren Gemischen.

5. Verfahren nach einem der vorstehenden Ansprüche, **dadurch gekennzeichnet, dass** das gesamte Flux- oder Verflüssigungsmittel im Schritt b) eingebracht wird.

6. Verfahren nach einem der vorstehenden Ansprüche, **dadurch gekennzeichnet, dass** das Flux- oder Verflüssigungsmittel in der Form einer Öl-in-Wasser-Emulsion eingebracht wird, wobei die Emulsion kein Bindemittel umfasst.

7. Verfahren nach einem der vorstehenden Ansprüche, **dadurch gekennzeichnet, dass** beim Schritt b) weiter ein Zuschlagstoff zugegeben wird, der für die Art des Fluxmittels geeignet ist, ausgewählt aus Sikkativen, Zement, Kalk und Calciumchlorid.

8. Verfahren nach einem der vorstehenden Ansprüche, **dadurch gekennzeichnet, dass** die festen mineralischen Fraktionen vor dem Schritt a) einen Schritt durchlaufen haben, durch den die mineralische Fraktion d/D bei Umgebungstemperatur mit einem Emulsionsbindemittel beschichtet wird.

9. Verfahren nach einem der vorstehenden Ansprüche, **dadurch gekennzeichnet, dass** die festen mineralischen Fraktionen vor dem Schritt a) einen Schritt durchlaufen haben, durch den die mineralische Fraktion 0/d warm (Umgebungstemperatur < T < 100 °C) durch ein Bindemittel beschichtet wird.

10. Verfahren nach einem der vorstehenden Ansprüche, **dadurch gekennzeichnet, dass** die festen mineralischen Fraktionen bezogen auf das Gesamtgewicht der festen mineralischen Fraktionen mindestens 20 Gewichts-% mineralische Fraktion 0/d, vorteilhafterweise mindestens 30 Gewichts-% mineralische Fraktion 0/d umfassen.

11. Verfahren nach einem der vorstehenden Ansprüche, **dadurch gekennzeichnet, dass** der Gehalt an Elementen einer Größe von kleiner als 0,063 mm bezogen auf das Gesamtgewicht der Fraktion 0/D 2 bis 17 Gewichts-%, vorteilhafterweise 2 bis 12 Gewichts-%, noch vorteilhafter 3 bis 9 Gewichts-% beträgt.

12. Verfahren nach einem der vorstehenden Ansprüche, **dadurch gekennzeichnet, dass** der Gesamtgehalt an Bindemittel bezogen auf das Gewicht der festen mineralischen Fraktion 2 bis 8 T/HGT (Teile pro hundert Gewichtsteile), vorteilhafterweise 3 bis 7 T/HGT, noch vorteilhafter 3,5 bis 5,5 T/HGT beträgt.

13. Kohlenwasserstoff-Kaltbeschichtungen, die über das Verfahren nach einem der Ansprüche 1 bis 12 erhalten werden können, umfassend eine feste mineralische Fraktion, ein Bindemittel und ein Fluxmittel, **dadurch gekennzeichnet, dass** in der festen mineralischen Fraktion bezogen auf das Gesamtgewicht der Fraktion 0/D der Gehalt an Elementen einer Größe von kleiner als 0,063 mm 2 bis 17 Gewichts-%, vorteilhafterweise 2 bis 12 Gewichts-%, noch vorteilhafter 3 bis 9 Gewichts-% beträgt, und **dadurch gekennzeichnet, dass** der Bindemittelfilm, der die Granulate beschichtet, am Kontakt mit dem Granulat ohne Fluxmittel, und am Umfang reich an Fluxmittel ist.

14. Verwendung von Kohlenwasserstoff-Kaltbeschichtungen nach Anspruch 13 zur Herstellung von Fahrbahndeckschichten.

15. Verwendung von Kohlenwasserstoff-Kaltbeschichtungen nach Anspruch 13 zur Herstellung von schweren Emulsionen.

16. Verwendung von Kohlenwasserstoff-Kaltbeschichtungen nach Anspruch 13 zur Herstellung von lagerfähigen Beschichtungen.

## Claims

1. Process for manufacturing cold mix asphalt, consisting of solid mineral fractions coated using an emulsion binder, said binder comprising a fluxing or fluidizing agent, said process comprising the following successive steps:
a. coating in a mixer at room temperature the totality of solid mineral fractions with an emulsion binder, said emulsion comprising the totality of the binder but not containing the totality of the fluxing or fluidizing agent, for a time period T sufficient to observe coating of the mix; then
b. adding, at the end of the time interval T, the remaining quantity of fluxing or fluidizing agent, and if need be an additive suited to the nature of the fluxing or fluidizing agent, in a mixer for a time interval t such that the T/t ratio is greater than 2, the other mixing conditions for steps a) and b) being moreover almost identical.

2. Process according to claim 1, wherein steps a) and b) are successive and continuous.

3. Process according to claim 1, wherein steps a) and b) are not successive but are interrupted by storage of the asphalt mixes obtained after step a).

4. Process according to any of the preceding claims, wherein the fluxing or fluidizing agent is one of petroleum, petrochemical or natural non fossil origin chosen from the group comprised of vegetable oils, derivatives and mixtures thereof.

5. Process according to any of the preceding claims, wherein the totality of the fluxing or fluidizing agent is added during step b).

6. Process according to any of the preceding claims, wherein the fluxing or fluidizing agent is added in the form of an oil-in-water emulsion, said emulsion not containing the binder.

7. Process according to any of the preceding claims, wherein, during step b), an additive adapted to the nature of the fluxing agent selected from the group consisting of siccatives, cement, lime and calcium chloride is added.

8. Process according to any of the preceding claims, wherein prior to step a), solid mineral fractions undergo a step in the course of which the d/D mineral fraction is coated at room temperature with an emulsion binder.

9. Process according to any of the preceding claims, wherein prior to step a) the solid mineral fractions undergo a step in the course of which the 0/d mineral fraction is coated at a temperature of between room temperature and 100°C by a binder.

10. Process according to any of the preceding claims, wherein the solid mineral fractions include, by weight relative to total weight of solid mineral fractions, at least 20% of the 0/d mineral fraction, advantageously at least 30% of the 0/d mineral fraction.

11. Process according to any of the preceding claims, wherein the content in elements below the size of 0.063 mm is 2 to 17% by weight, advantageously 2 to 12% by weight, more advantageously 3 to 9% by weight, relative to the total weight of the 0/D fraction.

12. Process according to any of the preceding claims, wherein the total binder content is 2 to 8 pph (part per hundred by weight), advantageously 3 to 7 pph, more advantageously 3.5 to 5.5 pph, relative to the weight of the solid mineral fraction.

13. Cold mix asphalt, able to be obtained by the process according to any of claims 1 to 12, comprising a solid mineral fraction, a binder and a fluxing agent, wherein, in the solid mineral fraction the content of elements below the size of 0.063 mm is 2 to 17% by weight, advantageously 2 to 12% by weight, more advantageously 3 to 9% by weight, relative to the total weight of the 0/D fraction, and wherein the binding film that coats the aggregates is, in contact with the aggregate, without fluxing agent and, at the periphery, rich in fluxing agent.

14. Use of cold mix asphalt, according to claim 13, for the production of wearing course layers.

15. Use of cold mix asphalt, according to claim 13, for the production of grave emulsions.

16. Use of cold mix asphalt, according to claim 13, for the production of storable asphalt mix.
